# EUROPÄISCHE PATENTANMELDUNG

(11) **EP 4 756 240 A1**
(43) Veröffentlichungstag der Anmeldung: **10.06.2026**
(21) Anmeldenummer: 24217409.2
(22) Anmeldetag: 04.12.2024
(51) Int. Cl.: F16B 13/06, A47K 13/26, F16B 5/02

(54) **BEFESTIGUNGSVORRICHTUNG, ZUGEHÖRIGE MONTAGEEINHEIT, ANORDNUNG, VERWENDUNG UND VERFAHREN**

(71) Anmelder: Ludwig Bertram GmbH, 30916 Isernhagen (DE)
(72) Erfinder:
(74) Vertreter: Torggler & Hofmann Patentanwälte - Innsbruck

(57) **Zusammenfassung**

Befestigungsvorrichtung (1) zur Befestigung eines Bauteils (2) an einem Körper (3) mit wenigstens einer Montageöffnung (4), wobei die Befestigungsvorrichtung (1) dazu ausgebildet ist, zumindest bereichsweise in die wenigstens eine Montageöffnung (4) des Körpers (3) eingeführt zu werden, und wobei die Befestigungsvorrichtung (1) einen Spreizmechanismus (5) aufweist, welcher dazu ausgebildet ist, die Befestigungsvorrichtung (1) zumindest in einem Verspreizbereich (6) der Befestigungsvorrichtung (1) auszudehnen und gegen eine Innenseite der Montageöffnung (4) zu verspreizen, wobei die Befestigungsvorrichtung (1) wenigstens ein getrennt vom Spreizmechanismus (5) ausgebildetes Ausgleichselement (7) aufweist, welches dazu ausgebildet ist, eine Ausdehnung der Befestigungsvorrichtung (1) im Verspreizbereich (6) zu vergrößern.

## Beschreibung

Die vorliegende Erfindung betrifft eine Befestigungsvorrichtung zur Befestigung eines Bauteils an einem Körper mit wenigstens einer Montageöffnung, wobei die Befestigungsvorrichtung dazu ausgebildet ist, zumindest bereichsweise in die wenigstens eine Montageöffnung des Körpers eingeführt zu werden, und wobei die Befestigungsvorrichtung einen Spreizmechanismus aufweist, welcher dazu ausgebildet ist, die Befestigungsvorrichtung zumindest in einem Verspreizbereich der Befestigungsvorrichtung auszudehnen und gegen eine Innenseite der Montageöffnung zu verspreizen.

Des Weiteren betrifft die Erfindung eine Montageeinheit und eine Anordnung mit einer derartigen Befestigungsvorrichtung, ein Verfahren zur Montage einer solchen Befestigungsvorrichtung und eine Verwendung derselben.

Derartige Befestigungsvorrichtungen werden eingesetzt, um Bauteile an Körpern zu befestigen, wobei die Befestigungsvorrichtungen in vorbereitete Montageöffnungen eingeführt und ausgedehnt oder verspreizt werden. Häufig haben die Montageöffnungen einen bestimmten gewünschten Durchmesser, welcher sich beispielsweise durch einen standardisierten Bohrerdurchmesser eines Bohrers ergeben kann, wenn ein solcher zum Vorbereiten der Montageöffnung eingesetzt wird. Es kann aber auch sein, dass ein Körper Montageöffnungen mit einem normierten Durchmesser aufweisen muss, so wie es z.B. bei Toilettenschüsseln der Fall ist. Bei Toilettenschüsseln hat der Durchmesser der Montageöffnungen gemäß DIN EN 33 (WC-Becken und WC-Anlagen - Anschlussmaße; Deutsche Fassung EN 33:2019) zwischen 13 und 17 mm zu betragen.

Natürlich kommt es immer wieder vor, dass Montageöffnungen und/oder ihr Durchmesser nicht immer perfekt oder wie gewünscht ausgebildet sind. Bei einer mit einem Bohrer vorbereitete Montageöffnung kann es durch unsauberes Bohren oder problematisches Material zu Unebenheiten oder Ungenauigkeiten kommen. Auch bei Toilettenschüsseln können die Montageöffnungen ungenau vorbereitet, z.B. nicht exakt konzentrisch oder nicht glatt gerundet ausgebildet, sein.

Viele herkömmliche Befestigungsvorrichtungen der eingangs genannten Art schaffen es bei unsauber vorbereiteten Montageöffnungen nicht, eine ausreichende Spreizkraft aufzubringen, um das Bauteil stabil und dauerhaft am Körper zu fixieren. Manch andere bekannte Befestigungsvorrichtungen sind weiters nur in einem sehr eingeschränkten Durchmesserbereich einsetzbar, da sie sich nur gering ausdehnen können. Im Anwendungsgebiet von Toilettenschüsseln ist es häufig der Fall, dass herkömmliche Befestigungsvorrichtungen nur in einem Teilbereich des gemäß DIN geforderten Durchmesserbereichs von zwischen 13 und 17 mm eingesetzt werden können. Für die Anwenderin ist dieser Umstand natürlich äußerst ungünstig, da sie sich nicht darauf verlassen kann, Befestigungsvorrichtungen zu erwerben, welche auch wirklich in die Montageöffnungen ihrer Toilettenschüssel passen und einen Toilettendeckel und/oder eine Toilettensitzerhöhung auch wirklich stabil und dauerhaft fixieren können.

Die Aufgabe der vorliegenden Erfindung ist es daher, eine zum Stand der Technik verbesserte Befestigungsvorrichtung bereitzustellen, insbesondere welche auch bei schlecht vorbereiteten Montageöffnungen funktionsfähig ist und welche für eine große Bandbreite von Montageöffnungsdurchmessern eingesetzt werden kann.

Diese Aufgabe wird durch die Merkmale des Anspruchs 1 gelöst, nämlich mit einer Befestigungsvorrichtung der eingangs genannten Art, wobei die Befestigungsvorrichtung wenigstens ein getrennt vom Spreizmechanismus ausgebildetes Ausgleichselement aufweist, welches dazu ausgebildet ist, eine Ausdehnung der Befestigungsvorrichtung im Verspreizbereich zu vergrößern.

Ein erster großer Vorteil der erfindungsgemäßen Befestigungsvorrichtung ist, dass sie eine größere Bandbreite von Montageöffnungsdurchmessern abdeckt als bekannte Befestigungsvorrichtungen aus dem Stand der Technik.

Ein weiterer großer Vorteil ist, dass sie im Gegensatz zu bekannten Befestigungsvorrichtungen auch bei unsauber vorbereiteten Montageöffnungen voll funktionsfähig ist.

Durch die Möglichkeit, mittels des wenigstens einen Ausgleichselements die Ausdehnung der Befestigungsvorrichtung zu erhöhen, kann die Spreizkraft gegen die Innenseite der Montageöffnung und somit die gesamte Haltekraft der Befestigungsvorrichtung vorteilhafterweise erhöht werden.

Die Befestigungsvorrichtung ist mit oder ohne das Ausgleichselement verwendbar, d.h. insbesondere gegen die Innenseite der Montageöffnung verspreizbar. Das wenigstens eine Ausgleichselement kann in Abhängigkeit eines Zustands und/oder eines Durchmessers einer vorhandenen Montageöffnung verwendet werden.

Die erfindungsgemäße Befestigungsvorrichtung kann als ein Set verstanden werden, das einen Spreizmechanismus und wenigstens ein Ausgleichselement umfasst. Es ist denkbar, dass ein Set einen oder mehrere Spreizmechanismen mit einem oder mehreren Ausgleichselementen pro Spreizmechanismus umfasst.

Die wenigstens eine Montageöffnung kann als ein Sackloch ausgebildet sein. Die wenigstens eine Montageöffnung kann eine Öffnung in einer Wandung, beispielsweise eines hohlen Körpers wie z.B. einer Toilettenschüssel, sein.

Die Innenseite der Montageöffnung kann ein vollständiger Bereich oder Teilbereich der Montageöffnung sein. Die Innenseite kann eine innere, z.B. zylindrische, Oberfläche der Montageöffnung sein. Die Innenseite kann einen Bereich einer Innenwandung eines hohlen Körpers im Anschluss an die Montageöffnung umfassen.

Der Verspreizbereich ist vorzugsweise jener Bereich der Befestigungsvorrichtung, welcher sich beim Auseinanderspreizen des Spreizmechanismus ausdehnt und/oder vergrößert.

Der Verspreizbereich kann als jener Bereich verstanden werden, welcher beim Auseinanderspreizen seine umhüllende Außenseite vergrößert.

Der Verspreizbereich umfasst vorzugsweise einen Bereich der Befestigungsvorrichtung, welcher dazu ausgebildet ist, beim Ausdehnen der Befestigungsvorrichtung gegen die Innenseite einer Montageöffnung zu drücken.

Weitere vorteilhafte Ausführungsformen der Erfindung werden in den abhängigen Ansprüchen definiert.

Es ist besonders bevorzugt vorgesehen, dass das wenigstens eine Ausgleichselement dazu ausgebildet ist, sich mit der Ausdehnung des Spreizmechanismus im Verspreizbereich zerstörungsfrei mitzuverformen, insbesondere mitzudehnen. Durch ein derart elastisches Verhalten lässt sich die Befestigungsvorrichtung besonders gut für eine große Bandbreite an Montageöffnungsdurchmesser einsetzen, da es sich in Abhängigkeit eines vorhandenen Durchmessers mehr oder weniger verformt, insbesondere mitdehnt.

Vorzugsweise ist das wenigstens eine Ausgleichselement verformbarer und/oder komprimierbarer als der Spreizmechanismus, insbesondere sodass es Unebenheiten der Innenseite der wenigstens einen Montageöffnung ausgleichen kann.

Das wenigstens eine Ausgleichselement weist vorzugsweise eine höhere Oberflächenrauheit auf als eine Oberfläche des Spreizmechanismus, insbesondere im Verspreizbereich. So kann ein etwaiges Verrutschen der Befestigungsvorrichtung im montierten Zustand vermieden oder reduziert werden.

In bevorzugten Ausführungsbeispielen besteht das wenigstens eine Ausgleichselement zumindest aus einem Kunststoff, vorzugsweise aus einem Thermoplast, z.B. aus PVC.

Das wenigstens eine Ausgleichselement ist vorzugsweise durch Extrusion herstellbar. So kann es besonders kostengünstig hergestellt werden.

Es ist bevorzugt vorgesehen, dass das wenigstens eine Ausgleichselement rohrförmig ausgebildet ist. Mit einer derartigen Form ist das wenigstens eine Ausgleichselement einfach herstellbar und vielseitig einsetzbar.

In besonders bevorzugten Ausführungsbeispielen weist der Spreizmechanismus eine ausdehnbare Spreizeinheit, ein Gegenelement und ein Befestigungsmittel auf, wobei das Befestigungsmittel, das Gegenelement und die Spreizeinheit dazu ausgebildet sind, durch gemeinsames Zusammenwirken eine Ausdehnung der Spreizeinheit zu bewirken. So kann auf einfache Art und Weise eine Spreizwirkung erzeugt werden.

Vorzugsweise sind die ausdehnbare Spreizeinheit, das Gegenelement und das Befestigungsmittel dazu ausgebildet, zwischen dem Gegenelement und dem Befestigungsmittel eine Relativbewegung zu erzeugen, infolge welcher die ausdehnbare Spreizeinheit auseinandergespreizt oder ausgedehnt wird. Damit wird ein besonders einfacher Spreizmechanismus verwirklicht.

In bevorzugten Ausführungsbeispielen weist die ausdehnbare Spreizeinheit in einem unverspreizten Zustand eine zylinderförmige umhüllende Außenform auf. So kann das Befestigungsmittel besonders einfach in die wenigstens eine Montageöffnung eingeführt werden.

In besonders bevorzugten Ausführungsbeispielen ist das wenigstens eine Ausgleichselement lösbar mit dem Spreizmechanismus verbunden oder verbindbar. So kann das wenigstens eine Ausgleichselement einfach in der gewünschten Position, insbesondere am Verspreizbereich, am Spreizmechanismus gehalten werden.

In bevorzugten Ausführungsvarianten weist der Verspreizbereich, vorzugsweise die ausdehnbare Spreizeinheit, im unverspreizten Zustand einen durchschnittlichen Außendurchmesser von zwischen 12,0 und 13,5 mm, besonders bevorzugt von 12,8 mm, auf.

Vorzugsweise ist das wenigstens eine Ausgleichselement reibschlüssig mit dem Spreizmechanismus, insbesondere mit der ausdehnbaren Spreizeinheit, verbindbar. So kann ein komplizierter Verbindungsmechanismus vermieden werden.

Es ist besonders bevorzugt vorgesehen, dass das wenigstens eine Ausgleichselement dazu ausgebildet ist, zumindest bereichsweise über den Spreizmechanismus, vorzugsweise über die ausdehnbare Spreizeinheit des Spreizmechanismus, gestülpt oder geschoben oder gezogen zu werden, insbesondere um an der gewünschten Position an der Befestigungsvorrichtung, vorzugsweise am Verspreizbereich, positioniert zu werden. So kann die Befestigungsvorrichtung besonders einfach vormontiert werden.

In bevorzugten Ausführungsbeispielen umfasst die ausdehnbare Spreizeinheit wenigstens, vorzugsweise genau, zwei Spreizarme, welche auseinanderspreizbar sind. So kann vor allem eine hohe Spreizkraft auf die Montageöffnung erzeugt werden.

Vorzugsweise erstrecken sich die wenigstens zwei Spreizarme im Wesentlichen in eine Längsrichtung der Befestigungsvorrichtung, wobei die Längsrichtung insbesondere jene Richtung ist, in welche die Befestigungsvorrichtung in eine Montageöffnung einführbar ist. Es ist denkbar, dass die wenigstens zwei Spreizarme Krümmungen, Biegungen etc. aufweisen, sodass sie sich nicht exakt, sondern nur im Wesentlichen, in die Längsrichtung erstrecken.

Besonders bevorzugt weisen die wenigstens zwei Spreizarme in Längsrichtung gesehen jeweils zwei Armenden auf und sind mit ihren, dem Gegenelement gegenüberliegenden Armenden strukturell mit einem Kopfbereich der Befestigungsvorrichtung verbunden.

Die wenigstens zwei Spreizarme und der Kopfbereich können in einer Seitenansicht eine T-artige Form aufweisen. Es kann auch sein, dass die wenigstens zwei Spreizarme und der Kopfbereich in der Seitenansicht eine I-artige Form aufweisen, insbesondere wobei die dem Gegenelement gegenüberliegenden Armenden direkt strukturell miteinander verbunden sind.

Es ist besonders bevorzugt vorgesehen, dass das Gegenelement ein Innengewinde aufweist und das Befestigungsmittel ein mit dem Innengewinde kompatibles Außengewinde aufweist. Damit lässt sich ein besonders einfacher Spreizmechanismus verwirklichen.

Das Befestigungsmittel ist vorzugsweise eine Schraube mit dem Außengewinde und einem Schraubenkopf.

Es ist bevorzugt vorgesehen, dass das Gegenelement getrennt von der ausdehnbaren Spreizeinheit ausgebildet ist und wenigstens einen Fortsatz aufweist, welcher mit der ausdehnbaren Spreizeinheit, vorzugsweise den wenigstens zwei Spreizarmen, so in Eingriff bringbar ist, dass eine Rotation des Gegenelements um eine Längsachse der Befestigungsvorrichtung relativ zur ausdehnbaren Spreizeinheit begrenzt wird. Damit lässt sich ein einfacher mechanischer Spreizmechanismus verwirklichen.

Es kann vorgesehen sein, dass die Befestigungsvorrichtung einen Dübel mit wenigstens zwei Teilen aufweist, wobei ein erster Teil die Spreizeinheit umfasst und zum Anlegen an eine Unterseite des Bauteils ausgebildet ist, und wobei ein zweiter Teil zum Anlegen an eine, der Unterseite gegenüberliegende Oberseite des Bauteils ausgebildet ist. Mit einer derartigen Zweiteilung des Dübels ist eine vorteilhafte Vormontage der Befestigungsvorrichtung am Bauteil möglich.

Vorzugsweise sind der Dübel und das Befestigungsmittel dazu ausgebildet, das Bauteil unter Zusammenwirken des Dübels und des Befestigungsmittels zu halten. Dies erleichtert die Montage des Bauteils an dem Körper.

Es ist bevorzugt vorgesehen, dass der Spreizmechanismus, vorzugsweise der Dübel, eine zentrische Öffnung aufweist, welche in die Längsrichtung des Befestigungsmittels verläuft und zur Aufnahme des Befestigungsmittels ausgebildet ist.

In bevorzugten Ausführungsbeispielen weist der erste Teil des Dübels einen Dübelkopf auf, welcher dazu ausgebildet ist, eine Relativverschiebung zwischen dem wenigstens einen Ausgleichselement und dem ersten Teil in die Längsrichtung der Befestigungsvorrichtung zu begrenzen. So kann das Ausgleichselement z.B. einfach in eine günstige Position relativ zum Dübel gebracht werden.

Der Dübelkopf kann dazu ausgebildet sein, beim Anlegen an die Unterseite des Bauteils eine orthogonale Ausrichtung der Befestigungsvorrichtung relativ zum Bauteil zu erzeugen. So kann eine Montage des Bauteils am Körper erleichtert werden.

In einer besonders bevorzugten Ausführungsvariante, bei welcher der Spreizmechanismus
- eine ausdehnbare Spreizeinheit in Form wenigstens zweier Spreizarme,
- ein Gegenelement umfassend ein Innengewinde und wenigstens einen Fortsatz und
- ein Befestigungsmittel in Form einer Schraube mit einem mit dem Inngewinde des Gegenelements kompatiblen Außengewinde,
wobei durch das Zusammenwirken der wenigstens zwei Spreizarme, des wenigstens einen Fortsatzes, des Innengewindes und des Außengewindes eine Relativbewegung zwischen dem Gegenelement und dem Befestigungsmittel zur Ausdehnung der Spreizeinheit erzeugbar ist, und wobei die Befestigungsvorrichtung einen Dübel mit wenigstens zwei Teilen aufweist, wobei ein erster Teil die Spreizeinheit umfasst und zum Anlegen an eine Unterseite des Bauteils ausgebildet ist, und wobei ein zweiter Teil zum Anlegen an eine, der Unterseite gegenüberliegende Oberseite des Bauteils ausgebildet ist.

Schutz wird auch begehrt für eine Montageeinheit zur Befestigung an dem Körper, wobei die Montageeinheit wenigstens eine erfindungsgemäße Befestigungsvorrichtung und ein Bauteil mit wenigstens einem Loch, vorzugsweise Langloch, umfasst, wobei die wenigstens eine Befestigungsvorrichtung in einem Betriebszustand der Montageeinheit durch das wenigstens eine Loch durchgeführt ist.

Vorzugsweise ist das Bauteil länglich und/oder weist an seinen beiden Endbereichen jeweils ein Befestigungselement auf, welches zum, vorzugsweise lösbaren, Befestigen von Anbauteilen wie z.B. eine Toilettensitzerhöhung ausgebildet ist.

In bevorzugten Ausführungsbeispielen umfasst das Bauteil zwei Langlöcher, insbesondere welche sich in eine Längsrichtung des länglichen Bauteils erstrecken.

Das Bauteil kann entlang dem wenigstens einen Loch Vertiefungen oder Abstufungen aufweisen, sodass ein Kopfbereich und/oder Dübelkopf der wenigstens einen Befestigungsvorrichtung zumindest bereichsweise versenkt im wenigstens einen Loch anordenbar ist.

Weiters wird Schutz begehrt für eine Anordnung mit einer erfindungsgemäßen Montageeinheit, wobei das Bauteil länglich ist, wenigstens zwei Löcher zur Aufnahme jeweils einer Befestigungsvorrichtung aufweist und an den beiden Endbereichen des Bauteils jeweils ein Befestigungselement zum Anbringen eines Toilettendeckels und/oder einer Toilettensitzerhöhung aufweist, wobei das Bauteil in Abstimmung der Löcher mit zwei Montageöffnungen der Toilettenschüssel an der Toilettenschüssel angelegt ist und je Montageöffnung mittels einer erfindungsgemäßen Befestigungsvorrichtung verspreizt oder verspreizbar ist.

Zusätzlich wird Schutz begehrt für ein Verfahren zur Montage eines Bauteils an einem Körper mit wenigstens einer Montageöffnung mit wenigstens einer erfindungsgemäßen Befestigungsvorrichtung, wobei das Verfahren die folgenden Schritte umfasst:
- Verbinden des wenigstens einen Ausgleichselements mit dem Spreizmechanismus;
- Einführen, insbesondere zumindest des Verspreizbereichs, der Befestigungsvorrichtung in die wenigstens eine Montageöffnung; und
- Ausdehnen der Befestigungsvorrichtung zumindest im Verspreizbereich mittels des Spreizmechanismus.

Besonders bevorzugt erfolgt das Verbinden des wenigstens einen Ausgleichselements mit dem Spreizmechanismus, vorzugsweise der ausdehnbaren Spreizeinheit durch ein Überziehen oder Überschieben oder Überstülpen des wenigstens einen Ausgleichsmechanismus über den Spreizmechanismus, vorzugsweise über die ausdehnbare Spreizeinheit.

Es ist bevorzugt vorgesehen, dass das Verbinden des wenigstens einen Ausgleichselements mit dem Spreizmechanismus werkseitig erfolgt und die Befestigungsvorrichtung im vormontierten Zustand auslieferbar ist. Wenn die Montageöffnung des Körpers ausreichend groß ist, die Befestigungsvorrichtung inklusive dem wenigstens einen Ausgleichselement aufzunehmen, dann kann das Einführen der Befestigungsvorrichtung in die Montageöffnung unmittelbar erfolgen. Ist die Montageöffnung zu klein, um die Befestigungsvorrichtung inklusive dem wenigstens einen Ausgleichselement aufzunehmen, dann kann das wenigstens eine Ausgleichselement vom Spreizmechanismus abgenommen werden, und das Einführen der Befestigungsvorrichtung in die Montageöffnung kann ohne das wenigstens eine Ausgleichselement erfolgen.

Des Weiteren wird Schutz begehrt für eine Verwendung einer erfindungsgemäßen Befestigungsvorrichtung oder Montageeinheit zur Montage eines Toilettensitzes und/oder einer Toilettensitzerhöhung an einer Toilettenschüssel.

Weitere Vorteile und Einzelheiten vorteilhafter Varianten der Erfindung ergeben sich aus den Figuren sowie der dazugehörigen Figurenbeschreibung. Dabei zeigen:
- Fig. 1-2: ein erstes Ausführungsbeispiel einer erfindungsgemäßen Montageeinheit,
- Fig. 3-4: ein erstes Ausführungsbeispiel einer erfindungsgemäßen Befestigungsvorrichtung,
- Fig. 5-6: ein zweites Ausführungsbeispiel einer erfindungsgemäßen Befestigungsvorrichtung,
- Fig. 7-9: ein bevorzugtes Ausführungsbeispiel eines Ausgleichselements und
- Fig. 10-11: ein zweites Ausführungsbeispiel einer erfindungsgemäßen Montageeinheit.

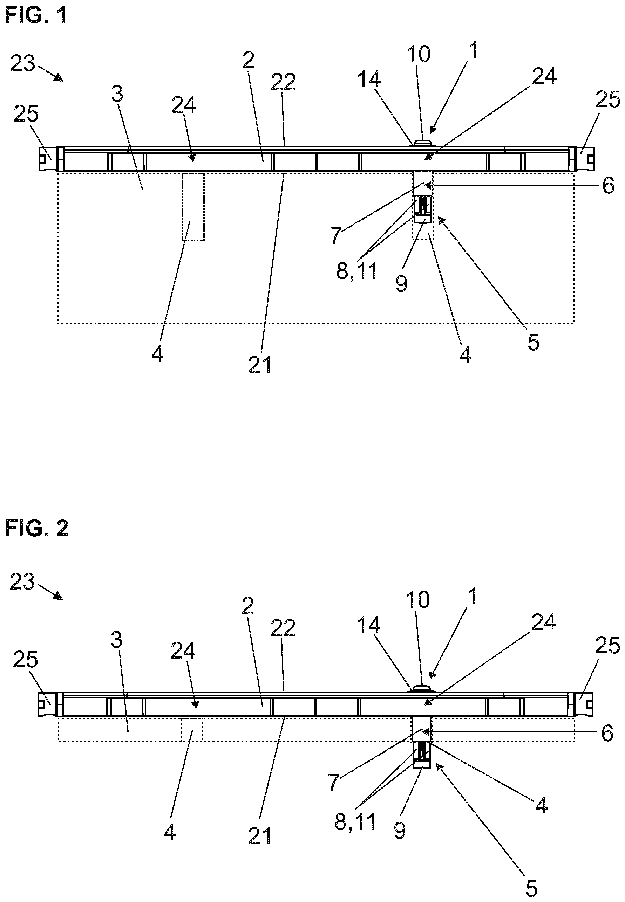

Die Fig. 1-2 zeigen ein erstes Ausführungsbeispiel einer erfindungsgemäßen Montageeinheit 23 mit einem ersten Ausführungsbeispiel einer erfindungsgemäßen Befestigungsvorrichtung 1 zur Befestigung eines Bauteils 2 an einem Körper 3, z.B. eine Toilettenschüssel, mit wenigstens einer Montageöffnung 4, wobei die Befestigungsvorrichtung 1 dazu ausgebildet ist, zumindest bereichsweise in die wenigstens eine Montageöffnung 4 des Körpers 3 eingeführt zu werden, und wobei die Befestigungsvorrichtung 1 einen Spreizmechanismus 5 aufweist, welcher dazu ausgebildet ist, die Befestigungsvorrichtung 1 zumindest in einem Verspreizbereich 6 der Befestigungsvorrichtung 1 auszudehnen und gegen eine Innenseite der Montageöffnung 4 zu verspreizen, wobei die Befestigungsvorrichtung 1 wenigstens ein getrennt vom Spreizmechanismus 5 ausgebildetes Ausgleichselement 7 aufweist, welches dazu ausgebildet ist, eine Ausdehnung der Befestigungsvorrichtung 1 im Verspreizbereich 6 zu vergrößern.

In Fig. 1 ist ein Anwendungsfall zu sehen, in welchem die wenigstens eine Montageöffnung 4 als ein Sackloch ausgebildet ist, in welches die Befestigungsvorrichtung 1 eingeführt oder einführbar ist.

In Fig. 2 ist ein Anwendungsfall zu sehen, in welchem die wenigstens eine Montageöffnung 4 eine Öffnung in einer Wandung des Körpers 3 ist, durch welche die wenigstens eine Befestigungsvorrichtung 6 hindurchragt oder hindurchragen kann. Es ist besonders bevorzugt vorgesehen, dass das wenigstens eine Ausgleichselement 7 im Bereich der Öffnung, d.h. insbesondere im Verspreizbereich 6 der Befestigungsvorrichtung 1, angeordnet ist.

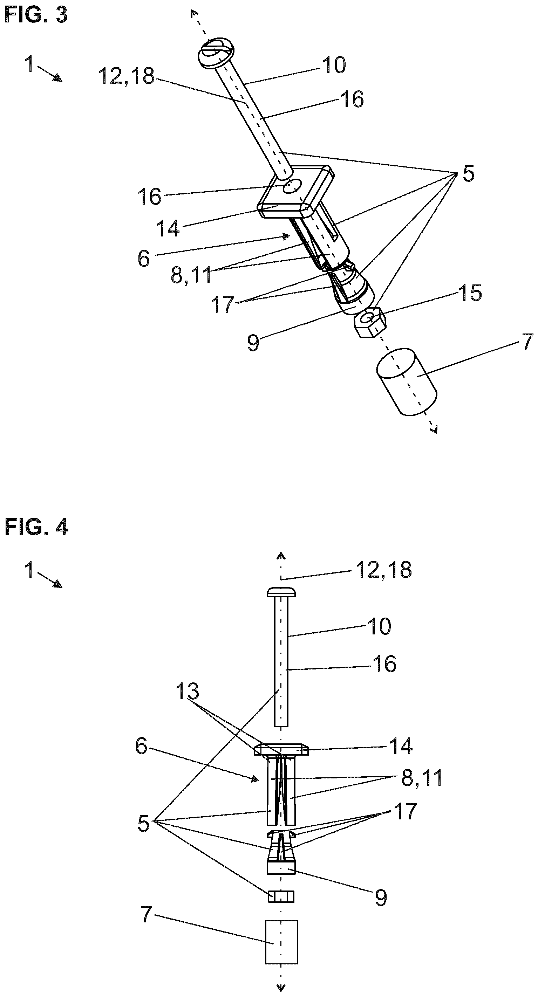

Die Fig. 3-4 zeigen Explosionsdarstellungen des ersten Ausführungsbeispiels einer erfindungsgemäßen Befestigungsvorrichtung 1, wobei der Spreizmechanismus 5 eine ausdehnbare Spreizeinheit 8, ein Gegenelement 9 und ein Befestigungsmittel 10 aufweist, wobei das Befestigungsmittel 10, das Gegenelement 9 und die Spreizeinheit 8 dazu ausgebildet sind, durch eine zu erzeugende Relativbewegung zwischen dem Gegenelement 9 und dem Befestigungsmittel 10 eine Ausdehnung der Spreizeinheit 8 zu bewirken.

Bei diesem Ausführungsbeispiel ist das wenigstens eine Ausgleichselement 7 dazu ausgebildet, sich mit einer Ausdehnung des Spreizmechanismus 5, insbesondere der ausdehnbaren Spreizeinheit 8, im Verspreizbereich 6 zerstörungsfrei mitzuverformen.

Bei diesem Ausführungsbeispiel ist das wenigstens eine Ausgleichselement 7 lösbar und reibschlüssig mit dem Spreizmechanismus 5, insbesondere mit der ausdehnbaren Spreizeinheit 8, verbindbar, insbesondere wobei das wenigstens eine Ausgleichselement 7 dazu ausgebildet ist, zumindest bereichsweise über den Spreizmechanismus 5, vorzugsweise über die ausdehnbare Spreizeinheit 8, gestülpt oder geschoben oder gezogen zu werden.

Vorzugsweise ist das wenigstens eine Ausgleichselement 7 rohrförmig ausgebildet und/oder ist eine umhüllende Außenseite der ausdehnbaren Spreizeinheit 8 zylindrisch ausgebildet.

Bei diesem bevorzugten Ausführungsbeispiel weist die ausdehnbare Spreizeinheit 8 wenigstens, vorzugsweise genau, zwei Spreizarme 11 auf, welche sich im Wesentlichen in eine Längsrichtung 12 der Befestigungsvorrichtung 1 erstrecken und in Längsrichtung 12 gesehen jeweils zwei Armenden aufweisen. Vorzugsweise sind die wenigstens zwei Spreizarme 11 mit ihren, dem Gegenelement gegenüberliegenden Armenden 13 (gut in Fig. 4 zu sehen) strukturell mit einem Kopfbereich 14 der Befestigungsvorrichtung 1 verbunden.

Bei diesem Ausführungsbeispiel weist das Gegenelement 9 ein Innengewinde 14 auf und das Befestigungsmittel 10 ein mit dem Innengewinde 15 kompatibles Außengewinde 16 auf.

Bei diesem Ausführungsbeispiel umfasst das Gegenelement 9 eine Mutter mit dem Innengewinde 14, wobei die Mutter formschlüssig im Gegenelement 9 eingesetzt ist.

Bei diesem Ausführungsbeispiel ist das Gegenelement 9 getrennt von der ausdehnbaren Spreizeinheit 8 ausgebildet und weist wenigstens einen Fortsatz 17 auf, welcher mit der ausdehnbaren Spreizeinheit 8, vorzugsweise den wenigstens zwei Spreizarmen 11, so in Eingriff bringbar ist, dass eine Rotation des Gegenelements 9 um eine Längsachse 18 der Befestigungsvorrichtung 1 relativ zur ausdehnbaren Spreizeinheit 8 begrenzt ist.

Bei den nun folgenden Beschreibungen der in den folgenden Figuren gezeigten Ausführungsbeispiele wird zur Vermeidung von Wiederholungen vorrangig auf die Unterschiede zum ersten Ausführungsbeispiel eingegangen. Ansonsten gilt die obige Beschreibung der ersten Ausführungsbeispiel der Montageeinheit und der Befestigungsvorrichtung soweit anwendbar auch für die nachfolgend noch beschriebenen Ausführungsbeispiele.

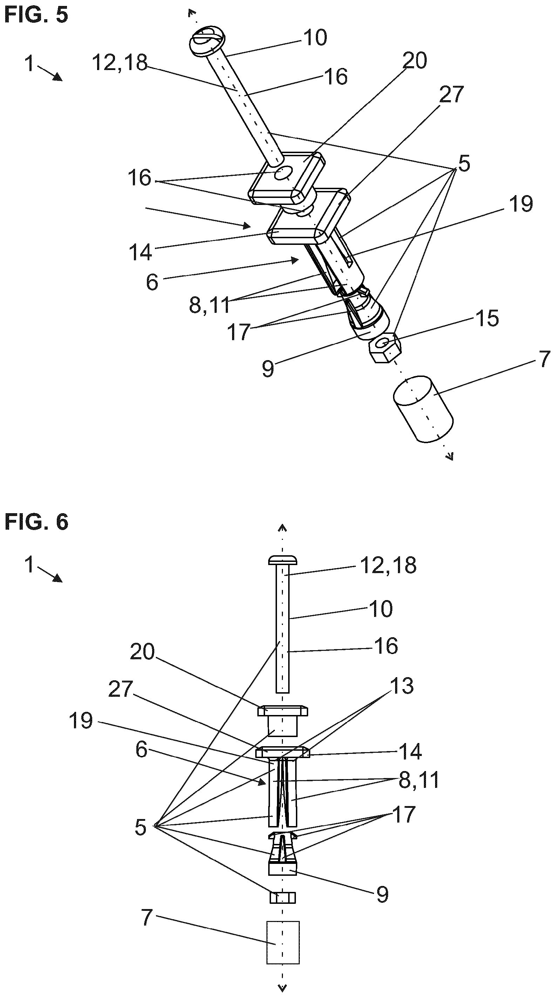

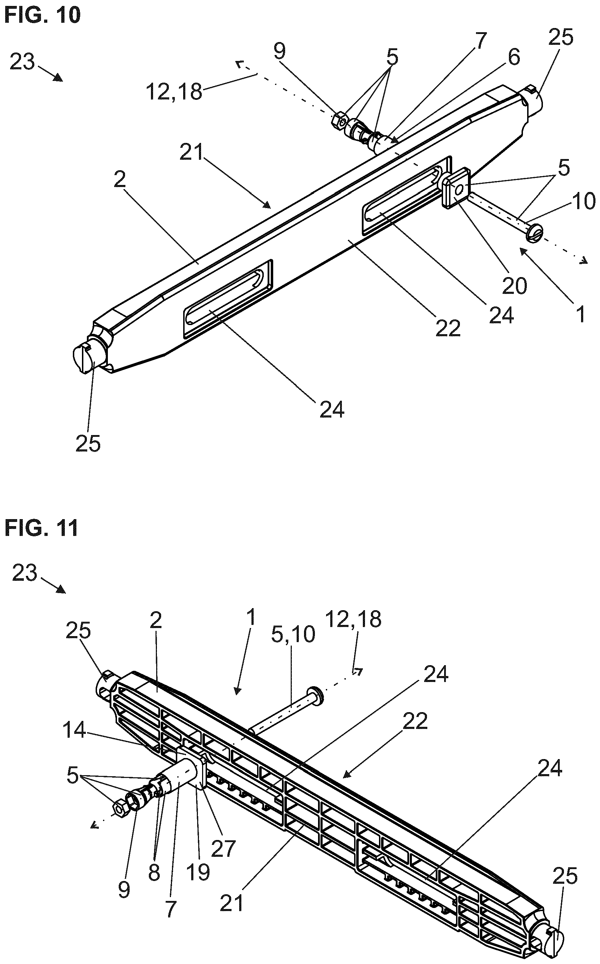

Die Fig. 5-6 zeigen ein zweites Ausführungsbeispiel einer erfindungsgemäßen Befestigungsvorrichtung 1, wobei die Befestigungsvorrichtung 1 einen Dübel mit wenigstens zwei Teilen 19,20 aufweist, wobei ein erster Teil 19 die Spreizeinheit 8 umfasst und zum Anlegen an eine Unterseite 21 des Bauteils 2 ausgebildet ist, und wobei ein zweiter Teil 20 zum Anlegen an eine, der Unterseite 21 gegenüberliegende Oberseite 22 des Bauteils 2 ausgebildet ist (siehe auch Fig. 10 und 11).

Vorzugsweise weist der erste Teil 19 einen Dübelkopf 27 auf, welcher dazu ausgebildet ist, eine Relativverschiebung zwischen dem wenigstens einen Ausgleichselement 7 und dem ersten Teil 19 in die Längsrichtung 12 der Befestigungsvorrichtung 1 zu begrenzen.

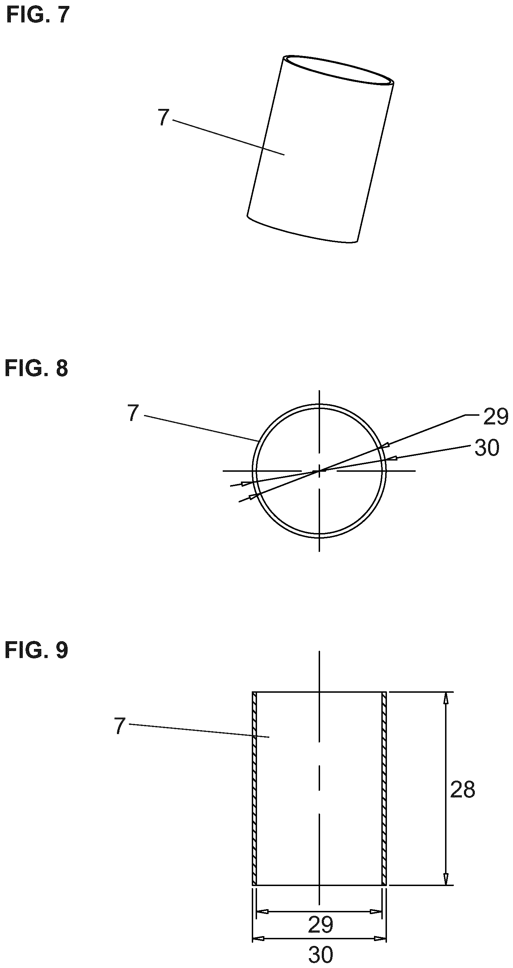

Die Fig. 7-9 zeigen ein bevorzugtes Ausführungsbeispiel eines Ausgleichselements 7 einer erfindungsgemäßen Befestigungsvorrichtung 1, wobei das Ausgleichselement 7 vorzugsweise
- eine Höhe 28 von zwischen 15,0 und 35,0 mm, vorzugsweise zwischen 20,0 und 30,0 mm, besonders bevorzugt 20,0 mm, und/oder
- einen Innendurchmesser 29 von zwischen 12,8 und 13,2 mm, vorzugsweise 13,0 mm, und/oder
- einen Außendurchmesser 30 von zwischen 14,4 und 15,0 mm, vorzugsweise 14,90 mm; und/oder
- eine Wandstärke von zwischen 0,8 und 0,95 mm, vorzugsweise 0,8 mm,
aufweist.

Die Fig. 10-11 zeigen ein zweites Ausführungsbeispiel einer erfindungsgemäßen Montageeinheit 23 mit dem zweiten Ausführungsbeispiel der wenigstens einen Befestigungsvorrichtung 1.

Bei diesem Ausführungsbeispiel umfasst die Montageeinheit 23 ein längliches Bauteil 2 mit zwei Löchern 24, insbesondere Langlöchern, und an den beiden Endbereichen des Bauteils 2 jeweils ein Befestigungselement 25 zum, vorzugsweise lösbaren, Befestigen von Anbauteilen wie z.B. eine Toilettensitzerhöhung.

Eine Vormontage einer in den Fig. 10 und 11 gezeigten Montageeinheit 23 erfolgt vorzugsweise umfassend die folgenden Verfahrensschritte (nicht zwingend chronologisch):
- Verbinden des wenigstens einen Ausgleichselements 7 mit dem Spreizmechanismus 5, vorzugsweise Überziehen oder Überschieben des wenigstens einen Ausgleichsmechanismus 7 über die Spreizeinheit 8, des ersten Teils 19 des Dübels;
- Anlegen des ersten Teils 19 an die Unterseite 21 des Bauteils 2 an einem Loch 24 des Bauteils 2;
- Anlegen des zweiten Teils 20 des Dübels an die Oberseite 22 des Bauteils 2 gegenüber dem ersten Teil 19;
- Durchführen des Befestigungsmittels 10 durch den Dübel und mit dem Gegenelement 9 in Eingriff bringen.

### Bezugszeichenliste:

- 1: Befestigungsvorrichtung
- 2: Bauteil
- 3: Körper
- 4: Montageöffnung
- 5: Spreizmechanismus
- 6: Verspreizbereich
- 7: Ausgleichselement
- 8: Spreizeinheit
- 9: Gegenelement
- 10: Befestigungsmittel
- 11: Spreizarme
- 12: Längsrichtung
- 13: Armenden
- 14: Kopfbereich
- 15: Innengewinde
- 16: Außengewinde
- 17: Fortsatz
- 18: Längsachse
- 19: erster Teil
- 20: zweiter Teil
- 21: Unterseite
- 22: Oberseite
- 23: Montageeinheit
- 24: Loch
- 25: Befestigungselement
- 26: Öffnung
- 27: Dübelkopf
- 28: Höhe
- 29: Innendurchmesser
- 30: Außendurchmesser

## Patentansprüche

1. Befestigungsvorrichtung (1) zur Befestigung eines Bauteils (2) an einem Körper (3) mit wenigstens einer Montageöffnung (4), wobei die Befestigungsvorrichtung (1) dazu ausgebildet ist, zumindest bereichsweise in die wenigstens eine Montageöffnung (4) des Körpers (3) eingeführt zu werden, und wobei die Befestigungsvorrichtung (1) einen Spreizmechanismus (5) aufweist, welcher dazu ausgebildet ist, die Befestigungsvorrichtung (1) zumindest in einem Verspreizbereich (6) der Befestigungsvorrichtung (1) auszudehnen und gegen eine Innenseite der Montageöffnung (4) zu verspreizen, **dadurch gekennzeichnet, dass** die Befestigungsvorrichtung (1) wenigstens ein getrennt vom Spreizmechanismus (5) ausgebildetes Ausgleichselement (7) aufweist, welches dazu ausgebildet ist, eine Ausdehnung der Befestigungsvorrichtung (1) im Verspreizbereich (6) zu vergrößern.

2. Befestigungsvorrichtung (1) nach Anspruch 1, wobei das wenigstens eine Ausgleichselement (7) dazu ausgebildet ist, sich mit einer Ausdehnung des Spreizmechanismus (5) im Verspreizbereich (6) zerstörungsfrei mitzuverformen, insbesondere mitzudehnen.

3. Befestigungsvorrichtung (1) nach einem der vorhergehenden Ansprüche, wobei das wenigstens eine Ausgleichselement (7) rohrförmig ausgebildet ist.

4. Befestigungsvorrichtung (1) nach einem der vorhergehenden Ansprüche, wobei der Spreizmechanismus (5) eine ausdehnbare Spreizeinheit (8), ein Gegenelement (9) und ein Befestigungsmittel (10) aufweist, wobei das Befestigungsmittel (10), das Gegenelement (9) und die Spreizeinheit (8) dazu ausgebildet sind, durch gemeinsames Zusammenwirken, vorzugsweise durch eine zu erzeugende Relativbewegung zwischen dem Gegenelement (9) und dem Befestigungsmittel (10), eine Ausdehnung der Spreizeinheit (8) zu bewirken.

5. Befestigungsvorrichtung (1) nach einem der vorhergehenden Ansprüche, wobei das wenigstens eine Ausgleichselement (7) lösbar mit dem Spreizmechanismus (5) verbunden oder verbindbar ist, vorzugsweise reibschlüssig mit der ausdehnbaren Spreizeinheit (8) verbindbar ist.

6. Befestigungsvorrichtung (1) nach Anspruch 5, wobei das wenigstens eine Ausgleichselement (7) dazu ausgebildet ist, zumindest bereichsweise über den Spreizmechanismus (5), vorzugsweise über die ausdehnbare Spreizeinheit (8) des Spreizmechanismus (5), gestülpt oder geschoben zu werden.

7. Befestigungsvorrichtung (1) nach einem der Ansprüche 4 bis 6, wobei die ausdehnbare Spreizeinheit (8) wenigstens, vorzugsweise genau, zwei Spreizarme (11) aufweist, insbesondere welche sich im Wesentlichen in eine Längsrichtung (12) der Befestigungsvorrichtung (1) erstrecken und in Längsrichtung (12) gesehen jeweils zwei Armenden aufweisen und welche mit ihren, dem Gegenelement gegenüberliegenden Armenden (13) strukturell mit einem Kopfbereich (14) der Befestigungsvorrichtung (1) verbunden sind.

8. Befestigungsvorrichtung (1) nach einem der Ansprüche 4 bis 7, wobei das Gegenelement (9) ein Innengewinde (14) aufweist und das Befestigungsmittel (10) ein mit dem Innengewinde (15) kompatibles Außengewinde (16) aufweist.

9. Befestigungsvorrichtung (1) nach einem der Ansprüche 4 bis 8, wobei das Gegenelement (9) getrennt von der ausdehnbaren Spreizeinheit (8) ausgebildet ist und wenigstens einen Fortsatz (17) aufweist, welcher mit der ausdehnbaren Spreizeinheit (8), vorzugsweise den wenigstens zwei Spreizarmen (11), so in Eingriff bringbar ist, dass eine Rotation des Gegenelements (9) um eine Längsachse (18) der Befestigungsvorrichtung (1) relativ zur ausdehnbaren Spreizeinheit (8) begrenzt ist.

10. Befestigungsvorrichtung (1) nach einem der Ansprüche 4 bis 9, wobei die Befestigungsvorrichtung (1) einen Dübel mit wenigstens zwei Teilen (19,20) aufweist, wobei ein erster Teil (19) die Spreizeinheit (8) umfasst und zum Anlegen an eine Unterseite (21) des Bauteils (2) ausgebildet ist, und wobei ein zweiter Teil (20) zum Anlegen an eine, der Unterseite (21) gegenüberliegende Oberseite (22) des Bauteils (2) ausgebildet ist.

11. Befestigungsvorrichtung (1) nach Anspruch 10, wobei der erste Teil (19) einen Dübelkopf (27) aufweist, welcher dazu ausgebildet ist, eine Relativverschiebung zwischen dem wenigstens einen Ausgleichselement (7) und dem ersten Teil (19) in die Längsrichtung (12) der Befestigungsvorrichtung (1) zu begrenzen.

12. Montageeinheit (23) zur Befestigung an dem Körper (3), wobei die Montageeinheit (23) wenigstens eine Befestigungsvorrichtung (1) nach einem der Ansprüche 1 bis 11 und ein Bauteil (2) mit wenigstens einem Loch (24), vorzugsweise Langloch, umfasst, wobei die wenigstens eine Befestigungsvorrichtung (1) in einem Betriebszustand der Montageeinheit (23) durch das wenigstens eine Loch (24) durchgeführt ist, vorzugsweise wobei das Bauteil (2) länglich ist und/oder wobei die beiden Endbereiche des Bauteils jeweils ein Befestigungselement (25) zum, vorzugsweise lösbaren, Befestigen von Anbauteilen wie z.B. eine Toilettensitzerhöhung aufweisen.

13. Anordnung mit einer Montageeinheit (23) nach Anspruch 12, wobei das Bauteil (2) länglich ist, wenigstens zwei Löcher (24) zur Aufnahme jeweils einer Befestigungsvorrichtung (1) aufweist und an den beiden Endbereichen des Bauteils (2) jeweils ein Befestigungselement (25) zum Anbringen eines Toilettendeckels und/oder einer Toilettensitzerhöhung aufweist, wobei das Bauteil (2) in Abstimmung der Löcher (24) mit zwei Montageöffnungen (4) der Toilettenschüssel an der Toilettenschüssel angelegt ist und je Montageöffnung (4) mittels einer Befestigungsvorrichtung (1) nach einem der Ansprüche 1 bis 11 verspreizt oder verspreizbar ist.

14. Verfahren zur Montage eines Bauteils (2) an einem Körper (3) mit wenigstens einer Montageöffnung (4) mit wenigstens einer Befestigungsvorrichtung (1) nach einem der Ansprüche 1 bis 11, wobei das Verfahren die folgenden Schritte umfasst:
- Verbinden des wenigstens einen Ausgleichselements (7) mit dem Spreizmechanismus (5), vorzugsweise Überziehen oder Überschieben des wenigstens einen Ausgleichsmechanismus (7) über die Spreizeinheit (8);
- Einführen, insbesondere zumindest des Verspreizbereichs (6), der Befestigungsvorrichtung (1) in die wenigstens eine Montageöffnung (4); und
- Ausdehnen der Befestigungsvorrichtung (1) zumindest im Verspreizbereich (6) mittels des Spreizmechanismus (5) .

15. Verwendung einer Befestigungsvorrichtung (1) nach einem der Ansprüche 1 bis 11 oder einer Montageeinheit (23) nach Anspruch 12, bevorzugt gemäß einem Verfahren nach Anspruch 14, zur Montage eines Toilettensitzes und/oder einer Toilettensitzerhöhung an einer Toilettenschüssel.
